Europäisches Patentamt

European Patent Office

Office européen des brevets

(19)

(11) Numéro de publication: **0 194 955**
**B1**

(12) **FASCICULE DE BREVET EUROPEEN**

(45) Date de publication du fascicule du brevet:
21.03.90

(51) Int. Cl.⁴: **G01N 1/24**

(21) Numéro de dépôt: **86470003.4**

(22) Date de dépôt: **03.03.86**

(54) Ligne de prélèvement et de conditionnement de gaz en vue de son analyse.

(30) Priorité: **04.03.85 FR 8503145**

(43) Date de publication de la demande:
**17.09.86 Bulletin 86/38**

(45) Mention de la délivrance du brevet:
**21.03.90 Bulletin 90/12**

(84) Etats contractants désignés:
**AT BE CH DE FR GB IT LI LU NL SE**

(56) Documents cités:
**FR-A- 2 289 899**
**US-A- 3 181 343**

(73) Titulaire: **INSTITUT DE RECHERCHES DE LA SIDERURGIE FRANCAISE (IRSID), Voie Romaine B.P. 64, F-57210 Maizières-lès-Metz(FR)**

(72) Inventeur: **Heitz, Georges, 27, rue Erckmann Chatrian, F-57158 - Montigny-Lès-Metz(FR)**

(74) Mandataire: **Ventavoli, Roger, INSTITUT DE RECHERCHES DE LA SIDERURGIE FRANCAISE (IRSID) Station d'Essais Boîte Postale 64, F-57210 Maizières-lès-Metz(FR)**

ACTORUM AG

EP 0 194 955 B1

**Description**

L'invention concerne une ligne de prélèvement destinée notamment à l'analyse des fumées et gaz sidérurgiques.

On sait que cette analyse est utile pour améliorer la connaisance d'un procédé ou régler son exploitation.

Les lignes connues sont généralement constituées, dans cet ordre, d'une sonde de prélèvement, de filtres, d'une pompe de circulation, d'une ligne de transfert, et d'une fuite à l'atmosphère. Une batterie d'analyseurs, complétée le cas échéant par un système de régulation de débit et de pression, et des filtres, est dérivée par un piquage situé en aval de la ligne de transfert, et, a fortiori, en aval de la pompe. Une telle ligne est décrite dans le brevet français FR-A 2 289 899.

Le coût de telles lignes est relativement élevé, tant pour leur installation que pour la maintenance, d'autant que dans la plupart des cas, compte tenu de la mise en pression du gaz, un chauffage de la ligne de transfert (qui peut aller par exemple de 20 à 150 mètres) est nécessaire pour éviter la condensation de l'eau (ou d'un autre gaz) en ligne.

Le but de l'invention est de pallier les inconvénients des lignes connues et de proposer une ligne simplifiée pour laquelle le chauffage de la ligne de transfert est moindre, voire inutile.

L'invention atteint son but par le fait que, la pompe est placée en aval de la ligne de transfert, et qu'une branche d'analyse comprenant un analyseur est piquée entre la ligne de transfert et la pompe.

Ainsi selon l'invention, la détente des gaz dans la ligne de transfert permet d'abaisser leur point de rosée et donc de diminuer voire supprimer le chauffage de la ligne.

Par ailleurs, un autre avantage de l'invention est qu'elle conduit à des débits prélevés faibles (cinq fois moindres que dans les lignes classiques), tout en conservant le même temps de transfert du gaz, mais le conditionnement est plus aisé notamment par le fait que l'on rencontre moins de poussières.

De plus, les pompes de prélèvement de gaz dans le cas des lignes connues doivent impérativement être à membranes sèches, afin d'éviter tout contact du gaz à analyser avec un quelconque fluide. Dans le cas de lignes sous basse pression, conforme à l'invention, cette contrainte disparaît.

D'autres avantages et caractéristiques ressortiront de la description suivante d'un mode préféré de réalisation. Il sera fait référence aux dessins annexés sur lesquels :

- la figure 1 est un schéma d'une ligne de prélèvement connue,
- la figure 2 est un schéma d'une ligne de prélèvement conforme à l'invention.

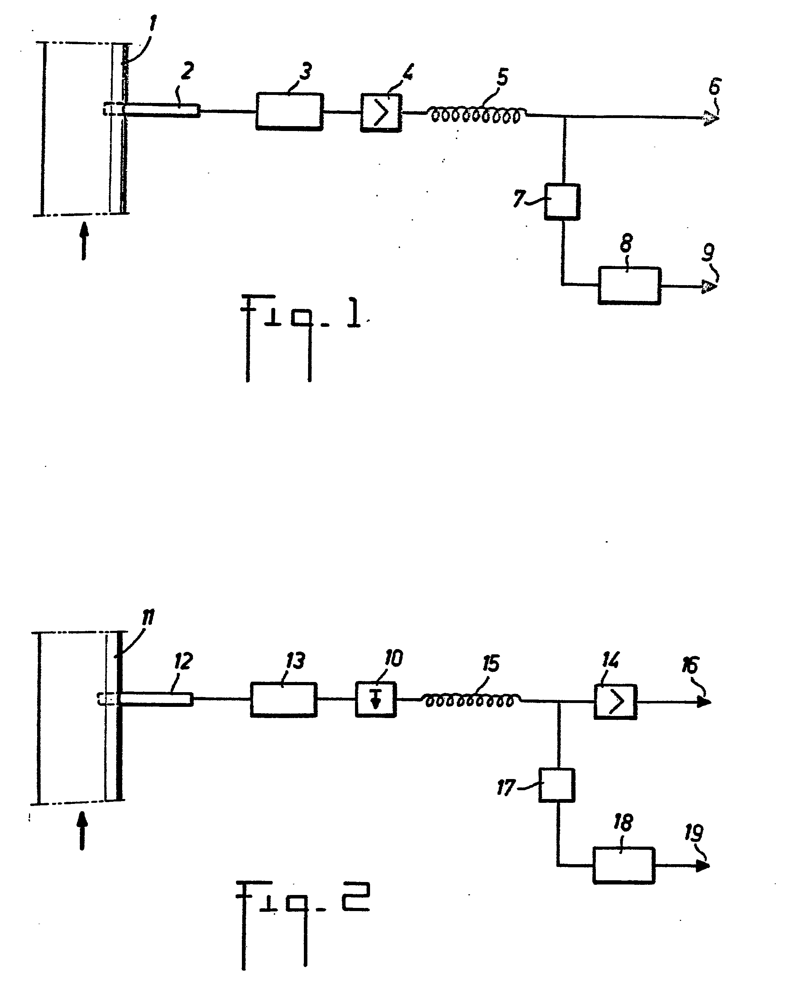

On voit sur la figure 1 la conduite industrielle 1 véhiculant les gaz à analyser sous une pression de 0 à 3 bars absolus. Des gaz sont prélevés sur la ligne de prélèvement qui comporte la sonde de prélèvement 2, le filtre 3, la pompe de circulation 4, la ligne de transfert chauffée 5, la fuite à l'atmosphère 6. Piquée sur cette ligne en aval de la ligne de transfert 5 et donc de la pompe 4, la ligne d'analyse comporte un dispositif de régulation de débit et de pression 7, un analyseur 8, et la fuite à l'atmosphère 9.

Sur la figure 2, la ligne de prélèvement et de conditionnement comporte, à partir de la conduite industrielle 11, la sonde 12, le filtre 13, la ligne de transfert 15, et, en bout de ligne, la pompe aspirante 14 et la fuite à l'atmosphère 16.

La branche d'analyse, piquée entre la ligne de transfert 15 et l'entrée de la pompe 14 comporte un spectromètre de masse 18 et la fuite à l'atmosphère 19.

Comme il est important que la pression d'introduction dans le spectromètre 18 soit constante, il est prévu de régler la pression (qui pourrait varier par suite de bouchage de la sonde, encrassement des filtres,...) en amont de la ligne de transfert 15 par le détendeur 10, et/ou juste en amont du spectromètre 18 par un régulateur de pression absolue 17 (par exemple, le régulateur de pression absolue commercialisée sous la référence MRIG par la Société LEYBOLD HERAEUS). Une régulation de débit est inutile ; toutefois, on aura avantage à ce que le régulateur de pression soit muni d'une sécurité d'action rapide pour éviter au spectromètre de subir les effets d'éventuelles surpressions accidentelles dans la ligne.

L'abaissement du point de rosée le long de la ligne, et donc la nécessité de chauffer ou non, est fonction notamment de la pression en aval de la ligne (dépendant de la pression d'entrée du spectromètre) et des caractéristiques de la ligne (diamètre, longueur). Ce diamètre de la ligne, qui ne doit pas être trop petit pour éviter que la pression en amont de la ligne soit trop grande, étant pris environ de 6 à 8 mm, on peut calculer en fonction des longueurs de lignes et du point de rosée initial du gaz analysé, le besoin de chauffage ou de simple mise hors gel de la ligne. Evidemment, plus la ligne est courte, moins il y a besoin de chauffer. D'autre part, comme la pression varie de façon parabolique dans la ligne, on peut calculer de chauffer seulement une partie de la ligne.

A titre purement illustratif, on va donner maintenant des indications pour le calcul d'une ligne de prélèvement "basse pression" selon l'invention.

Les spectromètres habituels acceptent classiquement une pression d'entrée du gaz à analyser de l'ordre de 6700 à 7300 Pa (50 à 55 torrs). On supposera que le spectromètre 18 symbolisé sur la figure 2 répond à ces spécifications.

Pour une longueur L de ligne de transfert 15 (figure 2), (L étant imposée généralement par l'infrastructure préexistante du lieu d'analyse) on peut déterminer la pression nécessaire à l'entrée de la ligne de transfert 15, pour différents diamètres de celle-ci. Le débit de gaz est, lui, imposé par la courbe caractéristique "pression-débit" de fonctionnement de la pompe 14.

Si on choisit, comme on y a avantage, un temps de transfert le plus réduit possible, la gamme des diamètres se situant de préférence entre 6 et 8 mm comme on l'a déjà indiqué, les pressions à prévoir à l'entrée de la ligne 15 sont alors de 13 300 à 18 700 Pa (100 à 140 torrs) environ pour une longueur L approximative de 50 mou de 18 700 à 29 300 Pa (140 à 220 torrs) environ pour une longueur L de l'ordre de 150 m.

On comprend donc que, en fonction de la pression dans la conduite 11 où s'opère le prélèvement et des caractéristiques en perte de charge du filtre 13 et éventuellement de la sonde 12 elle-même, la pression du gaz à l'entrée de la ligne de transfert 15 ne doit pas être trop supérieure aux chiffres indiqués ci-dessus. Sinon, il faut prévoir en entrée de ligne, un organe de perte de charge, tel que le détendeur 10. Bien entendu, dans ce qui vient d'être dit, on a supposé que la ligne secondaire de piquage reliant le spectromètre 18 à la sortie de transfert 15 n'a pas d'influence sensible sur la pression du gaz. Autrement, il faut bien sûr tenir compte également de la perte de charge qu'elle occasionne dans le flux gazeux.

On va à présent, également à titre illustratif, fournir un tableau montrant les besoins éventuels de chauffage de la ligne de transfert 15, pour une condensation, en fonction de différentes températures de rosée initiales du gaz dans la conduite 11 (1ère colonne) et de la longueur L de la ligne de transfert 15 (2ème colonne) pour un diamètre interne de celle-ci fixé à 8 mm.

| Température de rosée du gaz prélevée | Largeur "L" de la ligne de transfert | Température de chauffage de la ligne de transfert |
|---|---|---|
| 30°C | 32 m | hors gel |
| 40°C | 46 m | hors gel |
| 60°C | 50 m | 3°C |

On aura compris que l'invention est avantageusement applicable aux spectromètres de masse ou autres analyseurs analogues travaillant sous basse pression ; elle n'est pas pour autant d'application limitée à ce type d'appareils. Une pompe peut en effet être placée sur la branche d'analyse en amont du régulateur de pression 17, selon les nécessités de l'analyse.

## Revendications

1. Ligne de prélèvement et de conditionnement d'un gaz en vue de son analyse, du type comportant, sur une branche de prélèvement et de conditionnement, une sonde de prélèvement (12), des filtres (13), une pompe de circulation (14), une ligne de transfert (15), et un dispositif de fuite (16), et, sur une branche d'analyse piquée sur la branche de prélèvement et de conditionnement, un analyseur (18) et un dispositif de fuite (19), caractérisée en ce que dans la branche de prélèvement et de conditionnement, la pompe (14) est placée en aval de la sonde (12), des filtres (13) et de la ligne de transfert (15), et en ce que la branche d'analyse est piquée entre la ligne de transfert (15) et la pompe (14).

2. Ligne selon la revendication 1, caractérisée en ce que l'analyseur est un spectromètre de masse (18).

3. Ligne selon l'une quelconque des revendications 1 ou 2, caractérisée en ce que la branche d'analyse comporte un régulateur de pression (17) en amont de l'analyseur (18).

4. Ligne selon l'une quelconque des revendications 1 à 3, caractérisée en ce qu'un détendeur (10) est prévu en amont de la ligne de transfert (15).

## Claims

1. Line for the sampling and treatment of a gas for the purpose of its analysis, of the type comprising, on a sampling and treatment branch, a sampling probe (12), filters (13), a circulating pump (14), a transfer line (15) and a leakage device (16) and, on an analysing branch connected to the sampling and treatment branch, an analyser (18) and a leakage device (19), characterized in that, in the sampling and treatment branch, the pump (14) is located downstream of the probe (12), of the filters (13) and of the transfer line (15), and in that the analysing branch is connected between the transfer line (15) and the pump (14).

2. Line according to Claim 1, characterized in that the analyser is a mass spectrometer (18).

3. Line according to either one of Claims 1 or 2, characterized in that the analysing branch possesses a pressure regulator (17) located upstream of the analyser (18).

4. Line according to any one of Claims 1 to 3, characterized in that a pressure reducer (10) is provided upstream of the transfer line (15).

**Patentansprüche**

1. Leitungsanordnung zur Entnahme und Behandlung einer Gasprobe für deren Analyse, des Typs umfassend in einer Zweigleitung zur Entnahme und Behandlung eine Entnahmesonde (12), Filter (13), eine Umwälzpumpe (14), eine Übertragungsleitung (15) und eine Auslaßvorrichtung (16) und in einer Analyse-Zweigleitung, die an die Zweigleitung für die Entnahme und Behandlung angeschlossen ist, ein Analysegerät (18) und eine Auslaßvorrichtung (19), dadurch gekennzeichnet, daß in der Zweigleitung zur Entnahme und Behandlung die Pumpe (14) stromabwärts von der Sonde (12), den Filtern (13) und der Übertragungsleitung (15) angeordnet ist und daß die Analyse-Zweigleitung zwischen der Übertragungsleitung (15) und der Pumpe (14) angeschlossen ist.

2. Leitungsanordnung nach Anspruch 1, dadurch gekennzeichnet, daß das Analysegerät ein Massenspektrometer (18) ist.

3. Leitungsanordnung nach Anspruch 1 oder 2, dadurch gekennzeichnet, daß die Analyse-Zweigleitung einen Druckregler (17) stromaufwärts vom Analysegerät (18) umfaßt.

4. Leitungsanordnung nach einem der Ansprüche 1 bis 3, dadurch gekennzeichnet, daß ein Druckminderventil (10) stromaufwärts von der Übertragungsleitung (15) vorgesehen ist.

Fig. 1

Fig. 2